# EUROPEAN PATENT APPLICATION

(11) **EP 1 205 869 A1**
(43) Date of publication of application: **15.05.2002**
(21) Application number: 01125432.3
(22) Date of filing: 02.11.2001
(51) Int. Cl.: G06K 7/00, H01R 13/24

(54) **Connector for printed circuit card for placing IC cards and in particular SIM cards, in contact in mobile telephones**

(30) Priority: 07.11.2000 FR 0014567
(71) Applicant: FCI, 92400 Courbevoie (FR)
(72) Inventor: Pham-Van, Jean-Marie, 25440 Chenecey-Buillon (FR); Le Gallic, Hervé, 72400 Cherreau (FR)
(74) Representative: Beetz & Partner Patentanwälte

(57) **Abstract**

The present invention concerns a printed circuit card connector (1) for placing IC cards in contact, comprising a housing (2) provided with recesses (3) for elastic contacts, connected at one end to conducting tracks of the printed circuit card and able to be elastically pressed at their free end against the contacts of an IC card, the elastic contacts having at their free end a contact zone (5) in the shape of a cone, whose tip is flattened into a spherical shape.

## Description

The present invention concerns a printed circuit card connector (PCB) for placing integrated circuit cards (IC) in contact, comprising a housing provided with recesses for elastic contacts connected at one end to conducting tracks of the printed circuit card and capable of being elastically pressed at their free end against the contacts of an IC card.

Such printed circuit cards connectors are already familiar from, for example, USA 5,603,629. The printed circuit card connector which is described therein, has elastic contacts moulded into a housing, the free ends of the contacts being in the form of an arc and the springs of the contacts being oriented in the direction of insertion of the IC card, in such a way that when the card is inserted, the contact zones are placed one against the other on the card in the form of flat ramps, so that they can readily be lowered on the card being pressed against the latter, to be, in their final position, pressed against the contact faces of the IC card by an elastic pressure force.

In the printed circuit connectors for which the direction of insertion of an IC card is not necessarily fixed in a predetermined direction, such a conFig.uration of contact springs proves to be inappropriate because, following a lateral insertion of a card, the elastic contacts are placed perpendicularly in the passage of insertion and would be damaged by the front edge of the card. This problem occurs, in particular, in the housing of SIM cards in mobile telephones, which are not much larger than a fingernail and which are inserted by the user, not into a slot, but, as a general rule, obliquely from above into a fixing, at the bottom of which the printed circuit card connector is located. The SIM card then slides in the usual way and via one of its lateral edges into the upper face of the housing of the printed circuit card connector, the side by which the insertion takes place not being fixed and the edge of the SIM card on which the contact zones of the springs slide, not being fixed either.

The present invention has the object of improving a printed circuit card connector of the type described earlier, in such a way that the establishment of contact with an IC card and in particular, with a SIM card, can be effected from any direction, without adhesion of the contact zones to the edges of the card.

According to the invention, the solution of this problem is achieved by means of a printed circuit card connector for establishing contact of the IC cards, comprising a housing provided with a recess for elastic contacts connected by one end to conducting tracks of the printed circuit card and whose free ends are capable of being elastically pressed against the contacts of an IC card, the elastic contacts having at their free end a contact zone in the shape of a cone, whose tip is flattened to a spherical shape.

According to one preferred embodiment of the present invention, the contact zone has below the spherically shaped flattened tip, four acute angle recesses.

According to another embodiment of the present invention, the blade terminals formed by these recesses extend in the direction of the elastic arm of the elastic contact or perpendicularly thereto.

According to yet another embodiment of the present invention, the blade terminal which extends in the direction of the elastic arm toward the free end, lengthens the elastic arm and engages in the housing under the edge of an opening, through which passes the rounded spherically shaped part of the contact zone in order to be pressed against the contact face of an IC card.

According to still another embodiment of the present invention, the housing has recesses able to be equipped by elastic contacts and has a flat upper face from which protrude in two parallel rows, the rounded, spherically shaped tips of the contact zones passing through corresponding openings.

According to yet a further embodiment of the present invention, the elastic contacts have a U-shaped elastic arm, at whose free end is located the contact zone and at whose other end is connected, perpendicularly thereto, a fixing zone provided with lateral protuberances for anchoring in a recess, a fixing zone which is followed by a brazing tab bent at right angles on the level of the lower edge of the mounting plate of the housing.

According to still a further embodiment of the present invention, the housing has the shape of a bridge with two rows, each with three openings on the upper face and two housing mounting plates, the elastic contacts of the different rows being arranged anti-parallel to one another in the recesses and the brazing tabs projecting from the outer sides of the housing.

Lastly, according to yet a further embodiment of the present invention, the IC card is a SIM card and the printed circuit card is integrated into a mobile telephone.

The invention will be explained in greater detail with the help of an embodiment example with reference to drawings, where
- Fig. 1: is a perspective view and a side view of the printed circuit card connector according to the invention ;
- Fig. 2: shows the elastic contact and the housing, seen obliquely from below ; and
- Fig. 3: shows the housing provided with elastic contacts, seen in perspective from below, as well as an elevation view in perspective of the elastic contact.

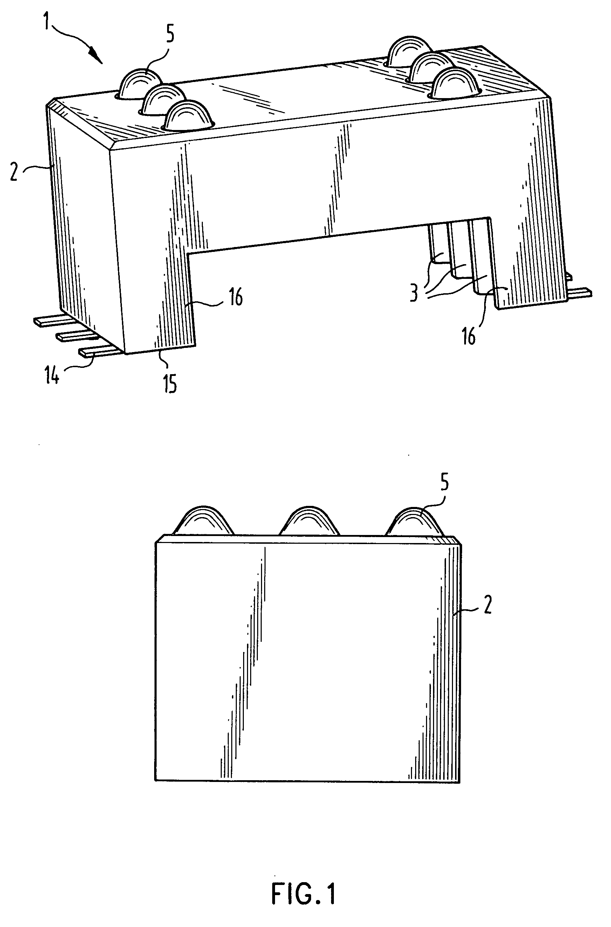

Fig. 1 shows the printed circuit card connector according to the invention, seen obliquely from the side. It is possible to see a housing 2 in the shape of a bridge, which has a flat upper face from which protrude the contact zones 5 belonging to springs 4 which, on being elastically pressed, must come into contact with the contact faces of an IC card. The housing has two mounting plates 16 on the lower face 15, from which protrude laterally towards the exterior, the brazing tabs 14. These are connected to the corresponding conducting tracks, located on the printed circuit card.

Below, Fig. 1 shows a front view of the housing 2 with contact zones 5 and the contact springs protruding from the upper face.

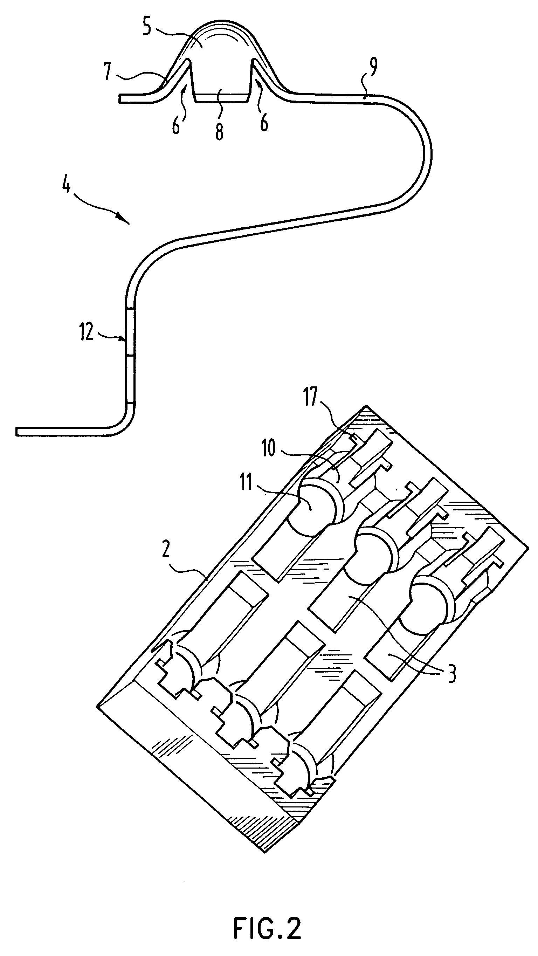

Fig. 2 shows a contact spring 4 according to the invention, with a conical shaped contact zone 5 provided with a rounded tip of spherical shape.

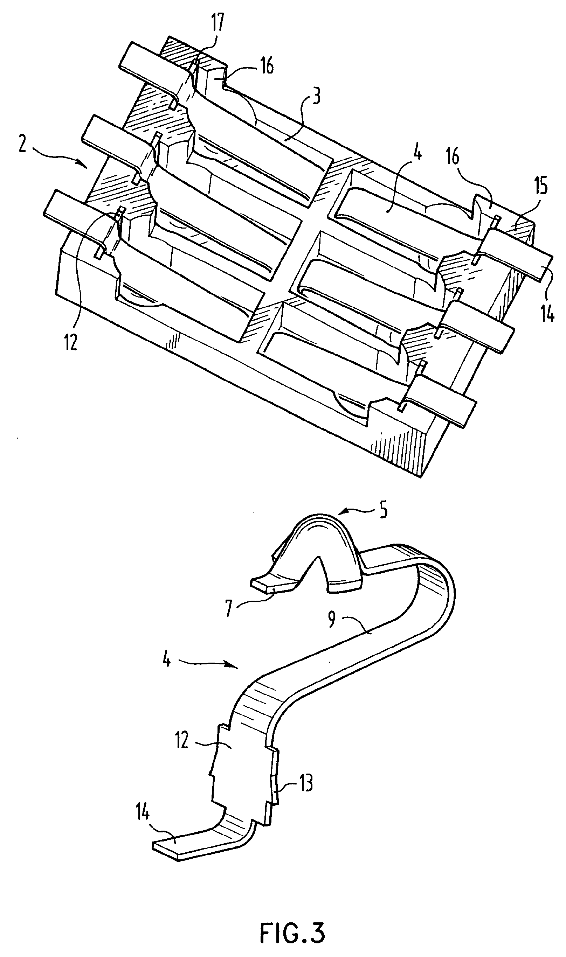

In the lower conical-shaped part of the contact zone 5, it is possible to see the slots 6, four in number and looking from above the contact zone, a cross. These slots 6 are provided for a reason linked to the technique of manufacture ; they facilitate the deformation of the material of the contact springs, which is relatively rigid and which ensures elastic deformation, in order to assume the shape of a cone, whose tip is rounded off and has a spherical shape. The free end of the elastic arm 9 consists of the blade terminal 7, whose front edge engages under edge 10 of an opening 11 in a recess 3 of the housing 2, in order to limit the elastic exit from the contact zone 5 outside the opening 11. In that way, the contact springs 4 can be integrated into the pre-stressed recesses 3. To the elastic arm 9 on the face opposite the free end is connected a fixing zone 12, on whose sides, as can be seen from the lower part of Fig. 3, are provided the protuberances 13, which make it possible to anchor them in the recess 3. A brazing tab 14 located on the level of the lower edge 15 of the base plate 16, again bent at right angles towards the exterior, is connected to the fixing zone 12.

Fig. 3 once again shows in its upper part the housing seen obliquely from below, the elastic contacts 4 fitted in position. It is possible to see, more particularly, the anchoring of the contact springs in the slots 17 which are provided for that purpose, into which the fixing zones 12 are sunk under pressure. The protuberances now act as counter-hooks and prevent any untimely separation of the elastic contacts 4 outside the housing 2. In the lower part of Fig. 3 can once again be seen the elevation of elastic contact 4 in perspective and in particular, the fixing zone 12 with its protuberances 13 which is clearly visible.

As can be seen, particularly in Fig. 1 and in the lower half of Fig. 3, the spherical configuration of the contact zone 5 makes possible the introduction of an IC card, in particular a SIM card, from any direction. Any possibility of adhesion of an edge of the card to the contact zones 5 is in any circumstances completely excluded, because the edge of the card presents, in all directions, an ascending flat contact surface such that any possibility of adhesion or clamping, and hence any bending and destruction of the elastic contacts, is excluded.

In this way, the present invention takes into account the tendency towards maximum miniaturisation of mobile telephone components for which the insertion of a SIM card no larger than a fingernail is readily feasible without any danger of sustaining undesirable damage.

The above description of an embodiment example is only an illustration of the invention defined in the Claims.

## Claims

1. A printed circuit card connector (1) for placing IC cards in contact, comprising a housing (2) provided with recesses (3) for the elastic contacts (4) connected at one end to conducting tracks of the printed circuit cards and able to be elastically pressed at their free end against the contacts of an IC card, **characterised by** the fact that the elastic contacts (4), have at their free end a contact zone (5) in the shape of a cone whose tip is flattened and has a spherical shape.

2. A printed circuit card connector according to Claim 1, **characterised by** the fact that the contact zone (5) has below the flattened tip which is spherical in shape, four acute angle recesses (6).

3. A printed circuit card connector according to Claim 2, **characterised by** the fact that the blade terminals (7, 8) formed by the recesses, extend in the direction of the elastic arm (9) of the elastic contact (4) or perpendicularly thereto.

4. A printed circuit card connector according to Claim 3, **characterised by** the fact that the blade terminal (7) which extends in the direction of the elastic arm (9) towards the free end, lengthens the elastic arm (9) and engages in the housing (2) under an edge (10) of an opening (11) through which passes the rounded part of spherical shape of the contact zone (5), in order to be pressed against the contact face of an IC card.

5. A printed circuit card connector according to one of the preceding Claims, **characterised by** the fact that the housing (2) has recesses (3) able to be equiped by the elastic contacts (4), with a flat upper face from which protrude in two parallel rows, the rounded tips of spherical shape, the contact zones (5) passing through the corresponding openings (11)

6. A printed circuit card connector according to Claim 5, **characterised by** the fact that the elastic contacts (4) have a U-shaped elastic arm (9), at whose free end is located the contact zone (5) and at whose other end is connected, perpendicularly thereto, a fixing zone (12) provided with lateral protuberances (13) for anchoring in a recess (3), a fixing zone which is followed by a brazing tab (14) bent at right angles at the level of the lower edge (5) of the mounting base of the housing.

7. A printed circuit card connector according to Claim 6, **characterised by** the fact that the housing (2) is shaped like a bridge, with two rows, each with three openings (11) on the upper face and two mounting bases of the housing (16), the elastic contacts (4) of the different rows being arranged anti-parallel to each other in the recesses (3) and the brazing tabs (14) protruding from the exterior face of the housing.

8. A printed circuit card connector according to one of the preceding Claims, **characterised by** the fact that the IC card is a SIM card and that the printed circuit card is integrated into a mobile telephone.
